(19) Europäisches Patentamt
European Patent Office
Office européen des brevets

(11) **EP 1 739 451 B1**

## (12) EUROPÄISCHE PATENTSCHRIFT

(45) Veröffentlichungstag und Bekanntmachung des Hinweises auf die Patenterteilung:
**14.04.2010 Patentblatt 2010/15**

(51) Int Cl.:
***G01S 13/60*** *(2006.01)*

(21) Anmeldenummer: **06114367.3**

(22) Anmeldetag: **23.05.2006**

(54) **Fahrzeuggeschwindigkeitssensor**

Vehicle speed sensor

Capteur de vitesse pour véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.06.2005 DE 102005030295**

(43) Veröffentlichungstag der Anmeldung:
**03.01.2007 Patentblatt 2007/01**

(73) Patentinhaber: **SIEMENS AKTIENGESELLSCHAFT**
**80333 München (DE)**

(72) Erfinder: **Kakuschke, Chris**
**12435 Berlin (DE)**

(56) Entgegenhaltungen:
**DE-A1- 4 223 119     DE-A1- 4 436 723**

- **KLEINHEMPEL W: "Automobile Doppler speedometer" VEHICLE NAVIGATION AND INFORMATION SYSTEMS CONFERENCE, 1993., PROCEEDINGS OF THE IEEE-IEE OTTAWA, ONT., CANADA 12-15 OCT. 1993, NEW YORK, NY, USA,IEEE, 12. Oktober 1993 (1993-10-12), Seiten 509-512, XP010219775 ISBN: 0-7803-1235-X**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Fahrzeuggeschwindigkeitssensor gemäß dem Oberbegriff des Anspruchs 1.

Traditionell wird die Geschwindigkeit eines Fahrzeuges durch Tachometer oder Wegimpulsgeber an den Rädern oder Achsen ermittelt. Unzulänglichkeiten treten vor allem beim Anfahren und Bremsen zu Tage, wo man auf diese Weise wegen Schlupf und Schleudern stark abweichende Werte ermittelt. Gerade in diesen Momenten benötigen aber die Fahrzeugantriebs- und Fahrzeugsteuerelektronik verlässliche Daten. Von den berührungsfreien Geschwindigkeitsmessprinzipien sind Mikrowellensensoren wegen ihrer Robustheit optischen oder ultraschallbasierten Systemen in der Verkehrstechnik überlegen. Mikrowellensensoren zur Geschwindigkeitsmessung werden als Dopplerradare oder auf der Basis einer Korrelationsmessung mehrerer in Fahrtrichtung hintereinander positionierten Einzelsensoren ausgeführt. Diese beiden grundsätzlich zu unterscheidenden Messverfahren besitzen eine Reihe von systematischen Abweichungen und Quellen von Unzuverlässigkeiten, welche teilweise nur mit sehr aufwendiger Mikrowellenhardware - stark bündelnde Antennen - beherrschbar sind.

Ein paralleler Einsatz beider Prinzipien innerhalb eines Geschwindigkeitssensorsystems wird bereits praktiziert, allerdings ist keine erfolgreiche Synthese auf Verfahrensebene bekannt. Deswegen bleibt bisher auch die aufwendige MW-Hardware für das Gesamtsensorsystem preisbestimmend, während die zur Signalverarbeitung eingesetzten Signalprozessoren vergleichsweise geringen finanziellen Aufwand erfordern. Systematische Abweichungen und Unsicherheiten beider Verfahren bleiben bisher wirksam.

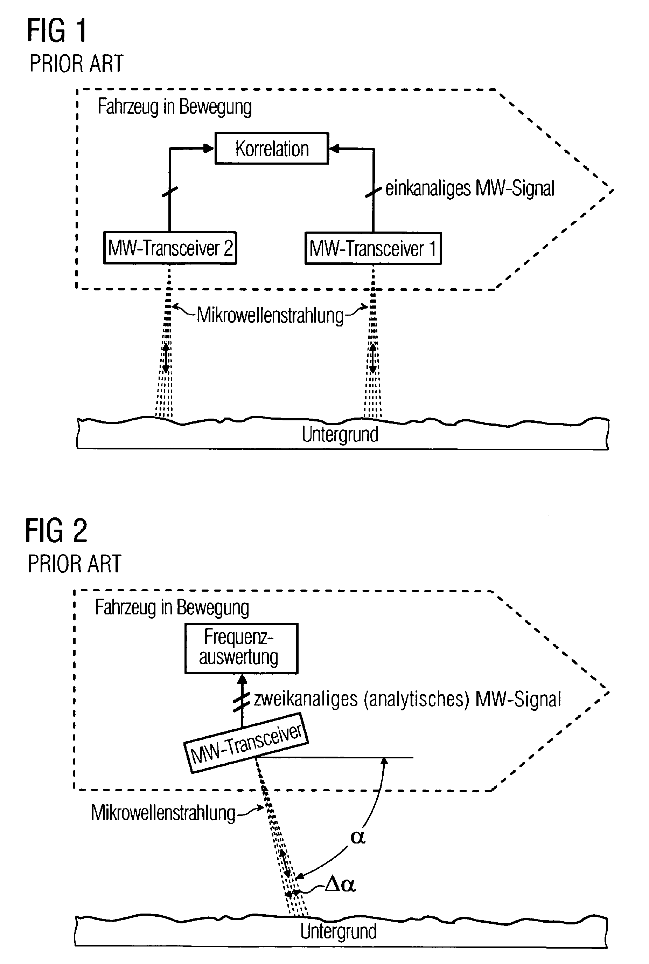

In Figur 1 ist der Stand der Technik bei Korrelationsverfahren dargestellt. Wechselnde Untergrundverhältnisse beeinflussen die Intensität des zurückgeworfenen Mikrowellensignals. Bewegt sich das Fahrzeug vorwärts, ist nach einer gewissen Zeitspanne das Intensitätsmuster von Transceiver 1 bei Transceiver 2 detektierbar und bei Rückwärtsfahrt umgekehrt. Die daraus resultierende Zeitdifferenz wird nach Digitalisierung der Signale durch die Bestimmung der Maximumposition der auf die Signalintensitäten angewendeten Kreuzkorrelationsfunktion errechnet. Aus dem Vorzeichen der Maximumposition lässt sich die Fahrtrichtung ermitteln und der Quotient aus dem konstruktiven Abstand und der Zeitdifferenz gibt die Momentangeschwindigkeit an. Besonders die korrekte Auswertung von Beschleunigungszuständen und die Realisierung einer kompakten Bauform sind bei diesen Korrelationssystemen noch nicht befriedigend gelöst. Weiterhin werden hohe Ansprüche an die relative Justage der Module zueinander gestellt. Bei glatten Oberflächen kann es zu Erkennungsschwierigkeiten wegen zu geringer Schwankung der Signalintensität gegenüber dem Rauschen kommen. Um ein signifikantes Intensitätsmuster im Signal zu erreichen, sind teuere Mikrowellen-Antennen notwendig, welche Untergrundstrukturen auflösen können. Das niederfrequente Rauschen der HF-Komponenten erschwert die Auswertung, so dass hohe Güteanforderungen an die Bauelemente die Kosten weiter steigern.

Den Stand der Technik bei Geschwindigkeitsdopplerverfahren zeigt Figur 2. Hier wird die Proportionalität von Geschwindigkeit und Dopplerfrequenzanteilen in den MW-Signalen ausgenutzt.

$$f(t) = |v(t)| \cdot \left( \frac{2}{\lambda} \cdot \cos(\alpha) \right) \qquad (1.1)$$

$\alpha$      Winkel zwischen effektiver Abstrahlrichtung und Bewegungsrichtung
*f (t)*      zeitabhängige Dopplerfrequenz
$v(t)$      zeitabhängige Geschwindigkeit
$\lambda$      Wellenlänge der MW-Strahlung
*t*      momentaner Wert der Systemzeit

Wird bei einer herkömmlichen Sensoranordnung nach Figur 2 die Abstrahlcharakteristik der Antenne verbreitert und somit der Bereich für $\alpha$ vergrößert, so verteilt sich im zu verarbeitenden Signal die spektrale Leistung ebenfalls auf einen weiteren Frequenzbereich nach (1.1). Die Spektralstruktur ist aber stark vom Untergrund beeinflusst und es wird schwierig, bei herkömmlicher Dopplerauswertung dem Signal ‚die' charakteristische untergrundunabhängige Dopplerfrequenz zuzuordnen. Für die Ermittlung der Bewegungsrichtung ist die Erzeugung eines analytischen Signals mit zwei Signalkomponenten im HF-Mischer und dessen anschließende Signalverarbeitung notwendig. Zusammen mit der für die starke Strahlbündelung - $\Delta\alpha$ klein - notwendige Antennenfläche wirkt sich dies kostenbestimmend bei der Hardware aus. Es werden entweder hohe Ansprüche an die Justage des Sensors relativ zum Fahrzeug gestellt oder eine individuelle Kalibrierung jedes Sensors nach der Montage ist notwendig.

Ein Geschwindigkeitsmessverfahren mit zwei hintereinander angeordneten schräg abstehenden Mikrowellendopplerradarsensoren, insbesondere für Straßenfahrzeuge, ist aus der DE 42 23 119 A1 bekannt. Die DE 44 36 723 A1 offenbart ein Geschwindigkeitsmessverfahren mit einem einkanaligen Dopplersensor, bei dem für mehrere Signalabschnitte Leistungsdichtespektren ausgewertet werden.

Der Erfindung liegt die Aufgabe zugrunde, die Geschwindigkeit eines Fahrzeuges berührungslos durch Auswertung von Mikrowellenstrahlung, welche am Untergrund reflektiert bzw. gestreut wird, weitgehend fehlerfrei zu ermitteln.

Die Aufgabe wird mit den kennzeichnenden Merkmalen des Anspruchs 1 gelöst. Das beanspruchte Geschwindigkeitsmessprinzip gehört grundsätzlich zu den Korrelationsverfahren. Es nutzt aber den Geschwindigkeitsdopplereffekt, um die Signale preiswerter breitstrahlender Mikrowellentransceivermodule ohne Polarisationsmischer zuverlässig und genau verarbeiten zu können. Die bisher beschränkenden Quellen systematischer Abweichungen und Unzuverlässigkeiten können so eliminiert oder zumindest in ihrer Wirkung stark vermindert werden. Außerdem verringern sich die Ansprüche der Montagegenauigkeit erheblich.

Ein weiterer hier nutzbarer Vorteil der Korrelationsverfahren gegenüber den Dopplerverfahren besteht in der Möglichkeit der Fahrtrichtungserkennung mit einkanaligen Mikrowellensensoren ohne Polarisationserfassung. Das vereinfacht deutlich die Hochfrequenzschaltung, die analoge NF-Schaltung und die Signalverarbeitungshardware und reduziert so noch einmal die Kosten.

Die Verwendung von zwei breitstrahlenden Mikrowellenmodulen mit annähernd gleichem Abstrahlwinkel $\alpha$=30.. 80° in einem Fahrzeuggeschwindigkeitssensor, welcher unempfindlich auf leichte Verkippung eines oder beider Module reagiert, ist ein hinreichendes Merkmal für die Verwendung des vorgestellten Messprinzips. Dies kann auch an einem Sensor mit unbekannter Funktionsweise einfach überprüft werden.

Optional kann die Hauptstrahlrichtung der Mikrowellentransceiver um einen gleichen Winkel gegenüber der Fahrrichtung seitlich verdreht werden. Das verringert Dynamikschwankungen des Mikrowellensignals aufgrund spiegelnder Reflektion an metallischen Gleiseinbauten, die überwiegend zur Fahrtrichtung senkrechte Außenflächen besitzen.

Der für die Korrelation genutzte Untergrundausschnitt stellt sich bei beiden MW-Keulen dynamisch ein und ist nahezu unabhängig von kleineren Schwankungen der Montagewinkel des Gesamtsensors und der Module untereinander. Lediglich der produktionstechnisch leicht zu überwachende Abstand der Module zueinander geht direkt in die Geschwindigkeitsberechnung ein.

Eine individuelle Kalibrierung des Sensors nach der Montage ist nicht notwendig. Die Nutzung einfacher und preiswerter Mikrowellenhardware aus der Massenfertigung eines nahezu beliebigen Herstellers ist möglich. Die verhältnismäßig anspruchsvolle Signalverarbeitung kann voraussichtlich mit einem modernen preiswerten SOC-Signalverarbeitungssystem (System-On-a-Chip-DSP) realisiert werden, welches momentan schon unter den Kosten der MW-Hardware liegt. In Zukunft dürfte der Preisverfall für leistungsfähige Signalverabeitungshardware weiter anhalten.

Es wird eine Möglichkeit zur korrekten, rückwirkungsfreien und von externen Schätzgrößen unabhängigen Korrelationsmessung auch in Beschleunigungszuständen aufgezeigt. Die Realisierung einer kompakten Bauform ist möglich. Bei glatten Oberflächen kann die Auswertung auch bei geringer Signalintensität gegenüber dem Rauschen erfolgreich durchgeführt werden. Die steile Abstrahlung der Mikrowellen in nur eine Richtung erlaubt eine breite Auswahl hinsichtlich möglicher Einbauorte am Fahrzeug.

Obwohl das Korrelationsverfahren mit Beschleunigungskorrektur ohne externe Schätz- und Messwerte auskommt, kann durch die schräge Abstrahlung eine gleichzeitige Dopplergeschwindigkeitsmessung mit bekannten Verfahren auf beiden Modulen durchgeführt werden. Die mögliche Symbiose der beiden Auswerteprinzipien ohne zusätzlichen Hardwareaufwand ist ein herausragendes Merkmal des vorgestellten Prinzips. Während das Dopplerverfahren auch größere Beschleunigungen im Niedriggeschwindigkeitsbereich toleriert und eine prinzipielle Unterscheidung zwischen Stillstand/Kriechen und Fahrzustand erlaubt, ist mit der Korrelation die Unterscheidung Kriechen - $v$<0,5km/h - und Stillstand möglich. Die Genauigkeit von Geschwindigkeits- und Wegmessungen bei gleichmäßiger Fahrt verbessert sich durch die Verfahrenskombination genauso wie die Zuverlässigkeit und Unabhängigkeit von systematischen Abweichungsursachen.

Mit der verwendeten Anordnung ist es weiterhin möglich, von jedem einzelnen MW-Transeiver über bekannte Verfahren der Dopplerfrequenzauswertung einen unabhängigen Geschwindigkeitswert zu ermitteln. Zusammen mit dem hochgenauen Multiratenkorrelationswert stehen also je zwei hardwarediversitäre und zwei verfahrensdiversitäre Messwerte für sicherungstechnische Anwendungen zur Verfügung. Es stehen für sicherungstechnische Anwendungen rückkoppelungsfreie Auswerteverfahren mit definierter maximaler Fehlerfortpflanzungsdauer zur Verfügung.

Bei der vorgestellten Verfahrensvariante der Beschleunigungskorrektur wird die Montagehöhe zwischen Sensor und Untergrund angenähert. Die Kenntnis dieser Größe verbessert einerseits die Einschätzung der Zuverlässigkeit des Verfahrens und ist andererseits auch für Spezialanwendungen im Schienenverkehr, z.B. Gleisbett prüfen, nutzbar.

Vorteilhafte Weiterbildungen sind in den Unteransprüchen gekennzeichnet.

Nachfolgend wird die Erfindung anhand figürlicher Darstellungen näher erläutert. Es zeigen

Figur 1     das bekannte Prinzip der Korrelationsmessung der Geschwindigkeit,
Figur 2     das bekannte Prinzip der Messung der Geschwindigkeit mittels Dopplereffekt,

Figur 3   das Prinzip der Geschwindigkeitsmessung mittels Korellationsverfahren und Nutzung des Dopplereffekts,
Figur 4   die Ausbildung von Isodopplerstreifen auf dem bestrahlten Untergrund,
Figur 5   ein Auswerteverfahren ohne Beschleunigungskorrektur,
Figur 6   ein Auswerteverfahren mit Geschwindigkeitsauswertung nach einer ersten Variante,
Figur 7   ein Auswerteverfahren mit Geschwindigkeitsauswertung nach einer zweiten Variante,
Figur 8   ein Teilverfahren für die Geschwindigkeitsberechnung ohne Beschleunigungskorrektur und
Figur 9   ein Teilverfahren für die Geschwindigkeitsberechnung mit Beschleunigungskorrektur.

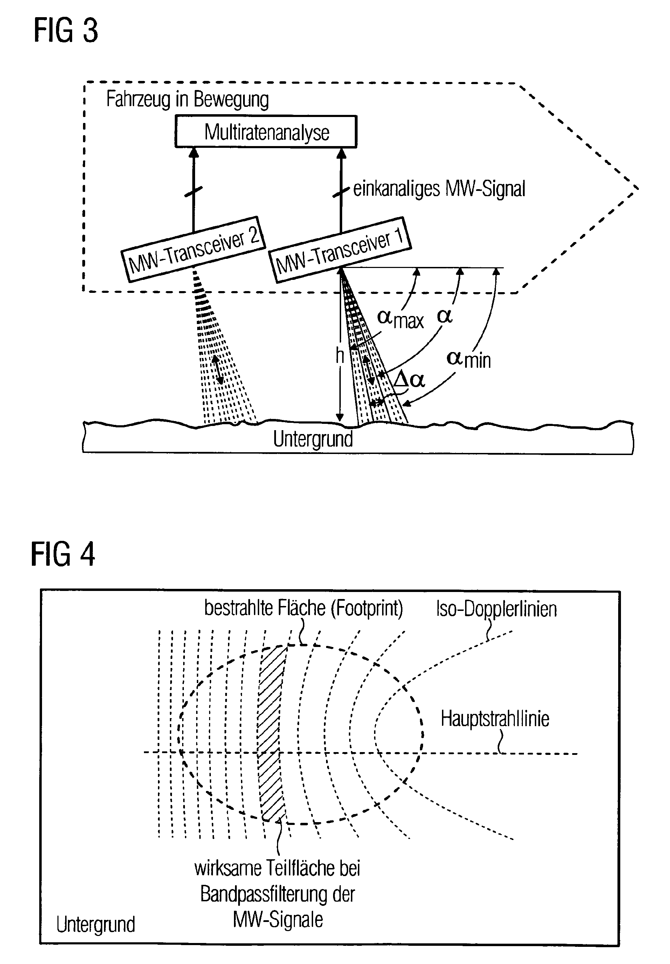

Das kombinierte Messprinzip nutzt den bei der klassischen Dopplerauswertung störenden Effekt der Spektralverbreiterung im MW-Signal bei der Aufweitung der Abstrahlcharakteristik. Bei konstanter Geschwindigkeit lässt sich einem Frequenzbereich des Signals eindeutig ein Winkelbereich der MW-Strahlung zuordnen, in dem die momentan gemessene Intensität erfasst wird (Figur 3).

Wird das Signal in viele aufeinander folgende Frequenzbänder zerlegt, so sind diesen Bändern aneinander gereihte Winkelbereiche der MW-Strahlung zugeordnet. Sie bestrahlen beim Auftreffen auf den Untergrund wiederum separate Streifenflächen zwischen den Isodopplerlinien (Figur 4). Aus dem Signal lässt sich das Reflektionsvermögen aller bestrahlten Streifen gleichzeitig ermitteln. Zwei hintereinander angebrachte breitstahlende Module (Figur 3) entsprechen also vom erfassten Informationsumfang einer Vielzahl von klassischen Korrelationsanordnungen (Figur 1). So stehen auch bei sehr glatten reflektionsarmen Oberflächen oder hoher Dämpfung der MW-Strahlung - Schneematsch - ausreichend Informationen für eine erfolgreiche Gesamtkorrelation zur Verfügung. Auch wenn keine der Einzellkorrelationen ein eineindeutiges Maximum aufweist - Versagen der klassischen Anordnung -, wird deren Überlagerung mit hoher Wahrscheinlichkeit ein auswertbares Ergebnis liefern. Die schmalbandige Filterung der MW-Signale unterdrückt darüber hinaus den stark verrauschten niederfrequenten Anteil, so dass preiswertere HF-Komponenten bei besserer Störunterdrückung Anwendung finden können.

Das beanspruchte Prinzip für die Fahrzeuggeschwindigkeitsmessung lässt sich entsprechend der Anforderungen in verschiedenen Messverfahren realisieren. Die anschließend gezeigten Realisierungsvarianten unterscheiden sich hinsichtlich ihres Implementierungsaufwandes bzw. ihrer Leistungsfähigkeit. In jeder Variante wird die sicherheitstechnisch kritische Problematik der Messwertrückführung separat betrachtet. Unabhängig von den Varianten ergeben sich noch einmal zwei grundsätzliche verschiedene Ansätze zur Geschwindigkeitsauswertung der Korrelationsergebnisse mit und ohne Beschleunigungskorrektur.

Die Beschreibung des Ausführungsbeispiels und seiner Varianten beginnt mit einer Abschätzung des notwendigen Verarbeitungsaufwandes durch ein echtzeitfähiges Signalverarbeitungssystem im Fall der gleichförmigen Bewegung und wird anschließend erweitert. So können auch die ausgeführten Varianten für verschiedene Systemanforderungen eingeordnet werden. Als Grundlage dient die Frequenz-Geschwindigkeits-Identität des Dopplereffektes in (1.1).

Wie in Figur 3 dargestellt, werden nun bei konstanter Geschwindigkeit mehrere fächerförmig aneinander gereihte Winkelbereiche betrachtet, um die Auflösung des Untergrundes auf das notwendige Maß zu steigern. Dabei wird für die Vereinfachung der Abschätzung ein Winkelbereich dem jeweils größeren Begrenzungswinkel mit der zugehörigen Analysefrequenz zugeordnet. Zur Unterscheidung der Winkel- bzw. Frequenzbereiche dient der Index $i$, welcher mit dem Winkel zunimmt. Es ergibt sich der Zusammenhang (1.2).

$$f(i) = |v| \cdot \frac{2}{\lambda} \cdot \cos\big(\alpha(i)\big)$$

$$\text{für} \quad v = \text{const}$$

$$\cos\big(\alpha(i)\big) = \frac{f(i) \cdot \lambda}{2 \cdot |v|}$$

$$\tag{1.2}$$

$$i = 1 \ldots N$$

$f(i)$   indizierte winkelabhängige Analysefrequenz
$i$   mit dem Winkel zunehmender Index der Winkelbereiche und Analyserfrequenzen
$N$   Anzahl der Winkelbereiche
$\alpha(i)$   der Dopplerfrequenz zugeordneter indizierter Winkel bei annähernd gleichförmiger Bewegung

Aus (1.2) kann der Quotient zweier im Index aufeinander folgender Analysefrequenzen errechnet und eine Anhängigkeit zur geforderten Auflösung der Untergrundstrukturen hergestellt werden. Um die Invarianz dieser Größe von der Fahrzeuggeschwindigkeit zu erreichen, muss ein konstanter Abstand der Analysewinkel festgelegt werden. Die Annahme der mit wachsendem Index absteigenden Analysefrequenzen in (1.3) ergibt sich aus dem Vorzeichen der Winkeldifferenz und schränkt dabei nicht die Allgemeingültigkeit ein.

$$\frac{f(i+1)}{f(i)} = \cos(\alpha_{min}) \cdot \sqrt{1 + \left(\frac{1}{\frac{\Delta x}{h_{max}} + \cot(\alpha_{min})}\right)^2} = q$$

$$(1.3)$$

$$\text{für} \quad \alpha(i) - \alpha(i+1) = \Delta\alpha = \text{const}$$

$h_{max}$     maximale Höhe des Sensors über dem Untergrund
$\alpha_{min}$     minimaler nutzbarer Winkel des abgestrahlten Mikrowellenbündels
$\Delta x$     zu erreichende Untergrundauflösung der synthetischen Apertur
$f(i)$     Mittenfrequenz des durch $i$ indizierten Frequenzintervalls
$i$     Index des betrachteten Frequenzintervalls
$\Delta\alpha$     konstante Breite der Winkelbereiche

Um Anhaltspunkte für die notwendigen Anpassungen eines breitbandigen Auswerteverfahrens zu erhalten, wird in (1.4) zunächst von dem maximal zulässigen Relativabstand der Frequenzintervalle ausgegangen.

$$\frac{\Delta f}{f} = \frac{1}{q} - 1 \qquad\qquad (1.4)$$

f     Mittenfrequenz des auszuwertenden Frequenzbandes
$\Delta f$     maximale Breite des auszuwertenden Frequenzbandes

Betrachtet man die Folge der Mittenfrequenzen in (1.2) als mathematische Reihe, so lässt sich aufgrund des festen Verhältnisses zweier aufeinander folgender Glieder zueinander nach (1.3) die Reihe als geometrisch charakterisieren. Wird weiterhin die obere Grenzfrequenz des ersten Auswertebandes bei halber Abtastrate des digitalen Signalverarbeitungssystems festgelegt, ergibt sich daraus die Frequenzteilungsvorschrift (1,5).

$$f(i) = \frac{f_A}{2} \cdot q^i \qquad\qquad (1.5)$$

$f_A$     Abtastfrequenz
$q$     Quotient von zwei aufeinander folgenden Gliedern der abfallenden Frequenzreihe

Jetzt kann man sich der Frage zuwenden, wie viele Analysefrequenzen notwendig sind, um die Fahrzeuggeschwindigkeit im zulässigen Geschwindigkeitsbereich $v_{min}$ bis $v_{max}$ sicher feststellen zu können. Da sich bei einem nach (1.5) festgelegtem Raster der Analysefrequenzen $f(i)$ die Winkel $\alpha(i)$ der synthetischen Apertur entsprechend der Momentangeschwindigkeit nach (1.2) einstellen, fallen die Mikrowellensignale nur in eine vergleichsweise kleine Anzahl $n$ von Analysebändern.

Diese Größe lässt sich in (1.6) aus dem Öffnungswinkel der verwendeten Mikrowellenmodule abschätzen.

$$n \geq \frac{\ln\left(\frac{\cos(\alpha_{max})}{\cos(\alpha_{min})}\right)}{\ln(q)} \qquad (1.6)$$

n      Anzahl der für die Auswertung relevanten Anzahl von Analysebändern

$\alpha_{max}$      maximaler nutzbarer Winkel des abgestrahlten Mikrowellenbündels

Es wird erst einmal davon ausgegangen, dass a priori keine weiteren Geschwindigkeitsinformationen vorliegen - rückwirkungsfreies sicherheitsoptimiertes System - und sämtliche Frequenzbänder ausgewertet werden müssen.

Auf Grundlage des bereits in (1.3) ermittelten minimalen Intervalls für die variable Abtastrate lässt sich darüber hinaus in (1.7) die Mindestanzahl der für die Auswertung notwendigen Frequenzbänder bei einer solchen Teilung berechnen. Um die spektrale Dopplerstruktur verarbeiten zu können, genügt es nicht, dass die Dopplerfrequenz mit der maximalen Leistungsdichte gerade noch auswertbar ist. Auch die benachbarten Frequenzen müssen für eine erfolgreiche Messung mit einbezogen werden. Diese Abhängigkeiten lassen sich in dem empirisch zu bestimmenden $k_{over}$ Oversampling zusammenfassen. Erfahrungsgemäß genügt hierfür ein Wert um 4.

$$N \geq \frac{\ln\left(\frac{v_{min}}{v_{max} \cdot k_{over}}\right)}{\ln(q)} \qquad (1.7)$$

N      Mindestanzahl der für die Auswertung notwendigen Frequenzintervalle

$k_{over}$      von der Frequenzauswertungsmethode abhängiger Oversamplingfaktor

$v_{min}$      minimale auszuwertende Fahrzeuggeschwindigkeit

$v_{ma}$      maximale auszuwertende Fahrzeuggeschwindigkeit

Entsprechend der Formeln (1.3), (1.4), (1.5) und (1.7) kann man die Eckdaten für das Signalverarbeitungssystem in (1.8) abschätzen.

$$q \approx 0,9$$

$$N \approx 100$$

$$\frac{\Delta f}{f} \approx 0,1 \qquad (1.8)$$

$$n \approx 20$$

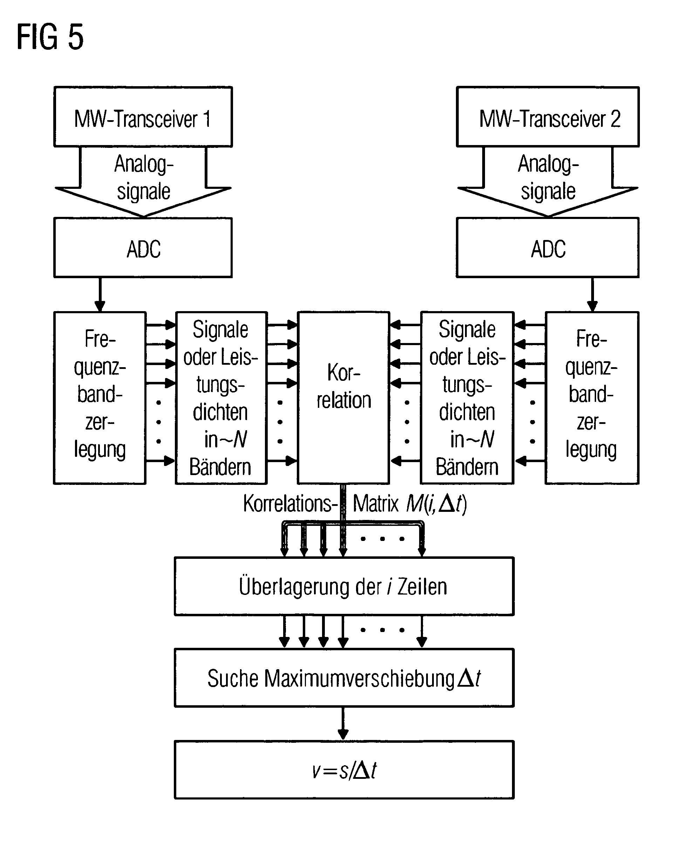

In Figur 5 ist die Basisvariante mit optimierter Empfindlichkeit aber ohne Beschleunigungskorrektur dargestellt. An ihr lässt sich gut das prinzipielle Vorgehen erläutern. Die analogen niederfrequenten Mischsignale beider Mikrowellentransceiver werden zuerst digitalisiert ADC. Danach durchlaufen die Abtastdaten eine digitale Zerlegung in N Frequenzbänder deren Grenzfrequenzen sich entsprechend (1.5) ergeben. Allerdings sind für die sich anschließende Korrelation nicht nur die bandbegrenzten Teilsignale direkt nutzbar, sondern deren Einhüllenden können in Form von Momentanleistungsdichten bzw. spektralen Amplitudenbeträgen gebildet werden. Für die Frequenzzerlegung mit einer Bandbreite entsprechend (1.4) bieten sich verschiede kontinuierliche Verfahren an, die sich hinsichtlich ihres Implementierungs- oder Ressourcenaufwandes unterscheiden: digitale Filterbänke, kaskadierte Hochpass/Tiefpasskombinationen - Waveletfilter -, Kombinationen dieser Verfahren mit Signalinterpolationen und ganzzahligen Dezimatoren, sowie weitere Spezialverfahren des so genannten ,Multirate Signal Processing' bzw. der ,Multiresolution Analysis'. Aber selbst bei den hinsichtlich der Rechenzeit optimierten Verfahren entstehen entsprechende Anforderungen an die Rechenleistung des verwendeten Prozessors oder des programmierbaren Logikschaltkreises, welcher die Zerlegung durchführt. Nachdem die abgetasteten MW-Signale jedes Moduls die Frequenzbandzerlegung durchlaufen haben und die optionalen Einhüllenden in jedem Frequenzband gebildet wurden, erfolgt die Kreuzkorrelation der Signale je eines Bandes. Diese Operation ist im Ressourcenaufwand mit der Frequenzbandzerlegung vergleichbar. Hierfür existieren ebenfalls bereits zahlreiche Standardverfahren. Es entsteht die Korrelationsmatrix, welche in jeder Zeile das Korrelationsergebnis des der Zeilennummer entsprechenden Band-Indexes $i$ enthält. Als Korrelationsergebnis wird dabei ein Vektor mit den Werten der Kreuzkorrelationsfunktion bezeichnet, der durch die Zeitdifferenz $\Delta t$ zwischen den beiden digitalisierten MW-Signalen in der Granularität der ADC-Abtastzeit adressiert wird. Da $\Delta t$ auch negative Werte annehmen kann, befindet sich die Position für $\Delta t$=0 in der Mitte des Vektors.

Im nächsten Schritt werden die einzelnen Korrelationsvektoren additiv überlagert. Dabei sind Wichtungen zur Störunterdrückung möglich. Die wahrscheinlichste Zeitdifferenz für die Passage der beiden MW-Module über dem gleichen Untergrundausschnitt hat die maximale Intensität im überlagerten Korrelationsvektor. Aus ihr ergibt sich die Momentangeschwindigkeit entsprechend der bekannten Identität $v=s/dt,$ wobei $s$ den konstruktiv vorgegebenen Abstand der MW-Module darstellt.

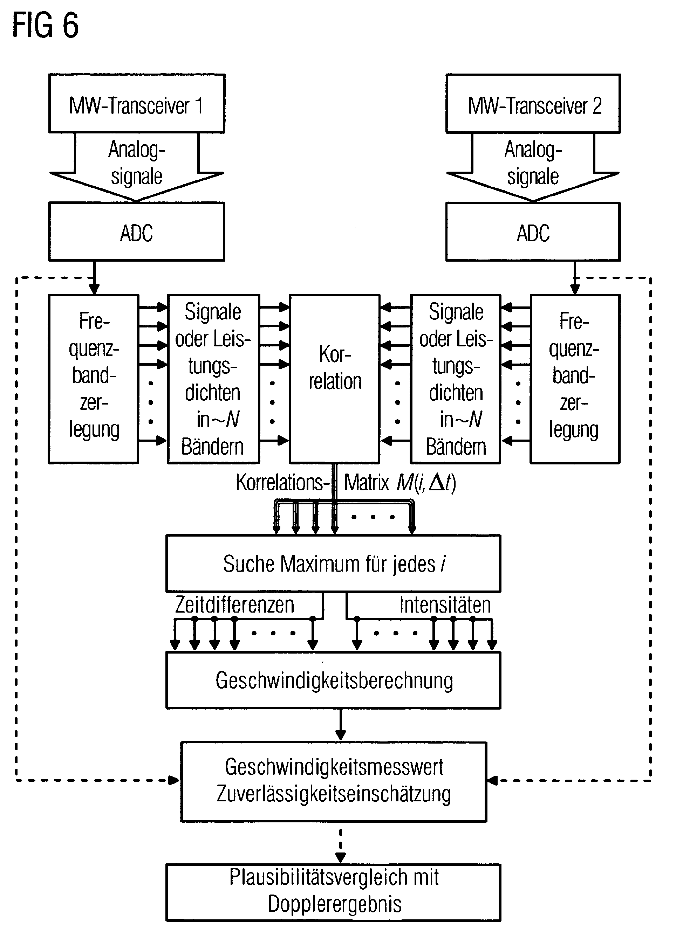

Die Grundversion der Auswertung (Figur 5) soll hinsichtlich ihrer systematischen Abweichungen optimiert werden und mit einer Möglichkeit zur Selbsteinschätzung versehen werden. So bietet es sich an, wie die Figur 6 (Anspruch 3) zeigt, in jedem Frequenzband eine Zeitdifferenz zu ermitteln und diese dann miteinander in einer komplexeren Geschwindigkeitsberechnung mit Zuverlässigkeitseinschätzung zu verknüpfen.

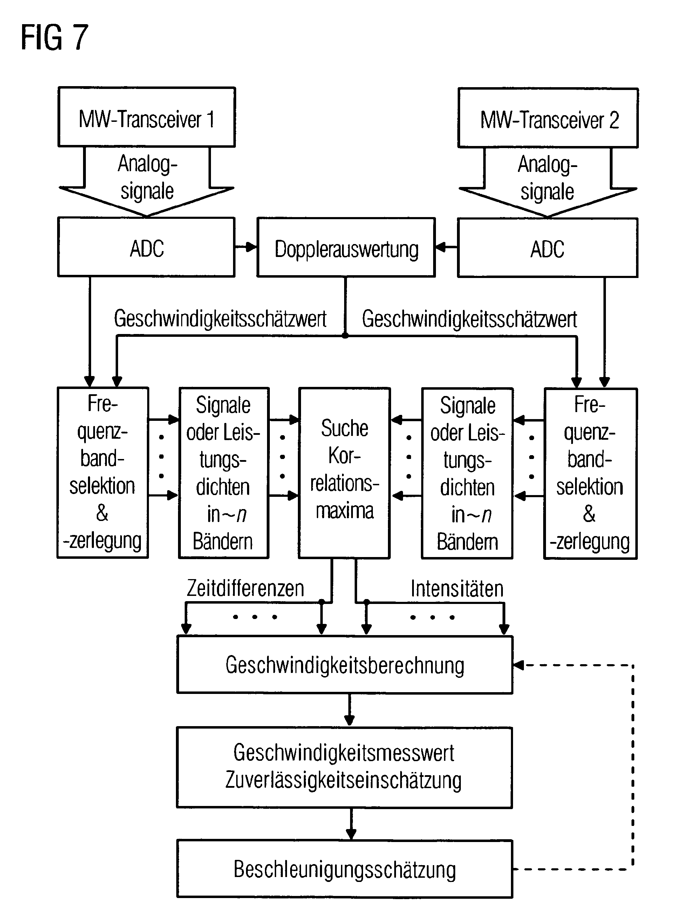

Die eigentliche Geschwindigkeitsauswertung ist der zentrale Teil der modularen Varianten gemäß Figuren 6 und 7. Die Zeitdifferenzen und Intensitätswerte dienen ihr als Ausgangsdaten.

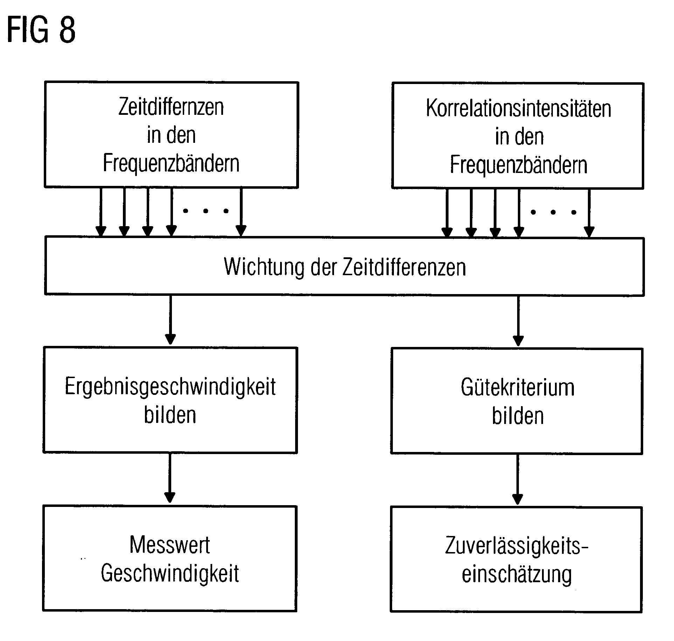

Bevor die nächsten Abschnitte weiter auf die Einzelheiten der Geschwindigkeitsauswertung eingehen, soll aber erst die Betrachtung der Rahmenbedingungen abgeschlossen werden. Das Ergebnis der Geschwindigkeitsauswertung ist ein momentaner Geschwindigkeitsmesswert, sowie ein numerisches Kriterium für die Zuverlässigkeitseinschätzung dieses Messwertes. Das Kriterium kann als Grundlage zur Verknüpfung des Geschwindigkeitsmesswertes mit dem Ergebnis einer optionalen konventionellen Dopplerauswertung eines oder beider MW-Module dienen. Besonders im Beschleunigungsfall kann die Dopplerauswertung die Ergebnisse der Geschwindigkeitsauswertung ohne Beschleunigungskorrektur (Figur 8) verbessern. Für die Variante der Geschwindigkeitsauswertung mit Beschleunigungskorrektur existiert die Option, externe Beschleunigungsmesswerte - etwa von einem zusätzlichen Beschleunigungssensor - zu berücksichtigen. Um die Anzahl weitgehend redundanter Abbildungen zu begrenzen, wird diese Option in Figur 7 bei der zweiten konzeptionellen Variante des modularen Auswerteverfahrens gezeigt. Umgekehrt ist auch dort eine zusätzliche Verknüpfung mit den Ergebnissen einer konventionellen Dopplerauswertung möglich. Zusammenfassend kann die erste Variante des modularen Auswerteverfahrens (Figur 6) als sehr ressourcenaufwendig und ungenau aber rückwirkungsfrei und damit besonders geeignet für hohe Sicherheitsansprüche und die Integration in einem übergeordneten sicherungstechnischen System charakterisiert werden. Meistens möchte man allerdings gar nicht die Sensorergebnisse extern nachverarbeiten, sondern fordert vom Sensor selbst die Plausibilitätsprüfung, Glättung und Korrektur der zeitlichen Messwertreihe. Es wäre ungünstig, diese Maßnahmen nur auf die Ergebnisse der Messung zu beschränken. Das gesamte Messverfahren sollte die Vorteile von Rückführungen, externen und internen Schätzwerten zur Optimierung nutzen können.

So entsteht die zweite Variante des Gesamtauswerteverfahrens, wie sie in Figur 7 zu sehen ist. Auffällig ist dabei vor allem die deutlich verringerte Zahl von Frequenzbändern. Sie wird durch eine der Frequenzbandzerlegung vorangestellte Selektion der relevanten Frequenzbänder erreicht. Hierzu ist ein Schätzwert der zu erwartenden Geschwindigkeit notwendig. Dieser kann natürlich durch den vorangehenden Durchlauf des Messverfahrens selbst gewonnen werden. Neben der Gefahr der Fehlerfortpflanzung - einloggen auf spektrale Störungen - bleibt hierbei das Problem der anfänglichen Initialisierung. Deswegen bietet sich hier wiederum die Kombination mit einer vorangestellten breitbandigen Lokalisierung der spektralen Dopplerstruktur an.

Im Folgenden wird auf die zentrale Geschwindigkeitsberechnung aus den Zeitdifferenzen und Korrelationsintensitäten detaillierter eingegangen. Es ergeben sich dabei wiederum zwei Umsetzungsvarianten mit unterschiedlichem Implementierungs- und Ressourcenaufwand. Zuerst die anspruchslose Variante, welche auf eine Korrektur der Beschleunigungsfehler verzichtet (Figur 8). Sie ist in einem eigenständigen Geschwindigkeitssensorsystem allerdings nur mit einer flankierenden Dopplerauswertung für Beschleunigungszustände sinnvoll.

Aus den einzelnen Zeitdifferenzen der Auswertebänder wird nach (1.9) eine gewichtet gemittelte Zeitdifferenz gebildet.

$$\Delta t_{WM} = \frac{\sum_{i} w(i) \cdot \Delta t(i))}{\sum_{i} w(i)} \qquad (1.9)$$

$\Delta t_{WM}$      gewichteter Mittelwert der Zeitdifferenzen (vorzeichenbehaftet)

$\Delta t(i)$      Zeitdifferenzen (vorzeichenbehaftet), durch $i$ indiziert

$w(i)$      Wichtungsfaktoren, durch $i$ indiziert

$i$      Index des betrachteten Frequenzintervalls

$$w(i) = \tilde{g}(I_{Korr}(i), ...) \qquad (1.10)$$

$I_{Korr}(i)$      Korrelationsintensitäten, durch $i$ indiziert

$\tilde{g}(...)$      funktionale Abhängigkeit (allgemein)

In die Wichtungsfaktoren (1.10) für die einzelnen Auswerteintervalle können alle Zwischenergebnisse der Signalverarbeitung einbezogen werden, die von $i$ abhängig sind und eine Aussagekraft über die Zuverlässigkeit und Genauigkeit der im Frequenzband ermittelten Zeitdifferenz besitzen. Eine wesentliche Rolle kommt dabei sicher den Korrelationsintensitäten zu, welche für einfache Realisierungen als Wichtungsfaktoren direkt herangezogen werden können. Verbessern kann man deren Verhalten durch spezielle Auswahl- und Maskierungsstrategien, welche Wichtungsanteile fernab der spektralen Dopplerstruktur unterdrücken und benachbarte Wichtungen berücksichtigen. Schätzwerte der ungefähren Fahrzeuggeschwindigkeit können auf diese Weise ebenfalls einfließen. Aber auch die Einbeziehung der Plausibilitätsprüfungsergebnisse der einzelnen Zeitdifferenzen wirkt sich positiv aus.

$$G = \frac{\gamma_1}{1 + \gamma_2 \cdot \sum_i w(i)} \cdot \left( \sum_i w(i) \cdot \left( \Delta t_{WM} - \Delta t(i) \right)^2 \right) + \left( 1 - \gamma_1 \right) \cdot G_{alt}$$

$$(1.11)$$

mit $1 > \gamma_1 \geq 0$   $\gamma_2 \geq 0$

$\gamma 1, \gamma 2$      empirische Parameter zur Justage des Filterverhaltens
$G$      Wert des Gütekriteriums
$G_{alt}$      vorangehender Wert des Gütekriteriums

Eine Aussage bezüglich der Zuverlässigkeit des Messergebnisses lässt der Wert des Gütekriteriums in (1.11) zu. Bei hoher Zuverlässigkeit nimmt er kleine Werte an, bleibt aber nichtnegativ. Über den Parameter $\gamma_1$ können bei $\gamma_1 > 0$ vergangene Messwerte in die Beurteilung einbezogen werden.

$$v_{akt} = \frac{s}{\Delta t_{WM}} \qquad (1.12)$$

$s$      konstruktiv vorgegebener Abstand der MW-Antennen ($s>0$)
$v_{akt}$      aktueller Geschwindigkeitsmesswert (vorzeichenbehaftet)

Aus dem gewichteten Zeitdifferenzmittelwert kann mit Hilfe des bekannten konstruktiven Abstandes der Mikrowellenmodule die Momentangeschwindigkeit (1.12) berechnet werden. Im Beschleunigungsfall weicht der zwischen den Frequenzzerlegungen zurückgelegte Weg von $s$ ab, so dass die Berechnung in diesem Fall systematisch fehlerbehaftet ist. Die Zeitdifferenzen streuen deshalb ebenfalls verstärkt, so dass das Gütekriterium (1.11) korrekt auf die verminderte Genauigkeit reagiert. Diesen Beschleunigungseffekt kann man nur begrenzt durch Vergrößerung des Modulabstandes $s$ reduzieren, da dies Kosten-und Gewichtssteigerungen, sowie Schwierigkeiten beim Finden eines geeigneten Einbauplatzes am Fahrzeug mit sich bringt. Zur Verringerung der Schwankungsbreite der Messwerte bei gleichmäßiger Fahrt bieten sich bekannte Mittelungs- und Glättungsverfahren an, welche aber nicht direkt in das Verfahren integriert und damit nur beschränkt wirksam sind.

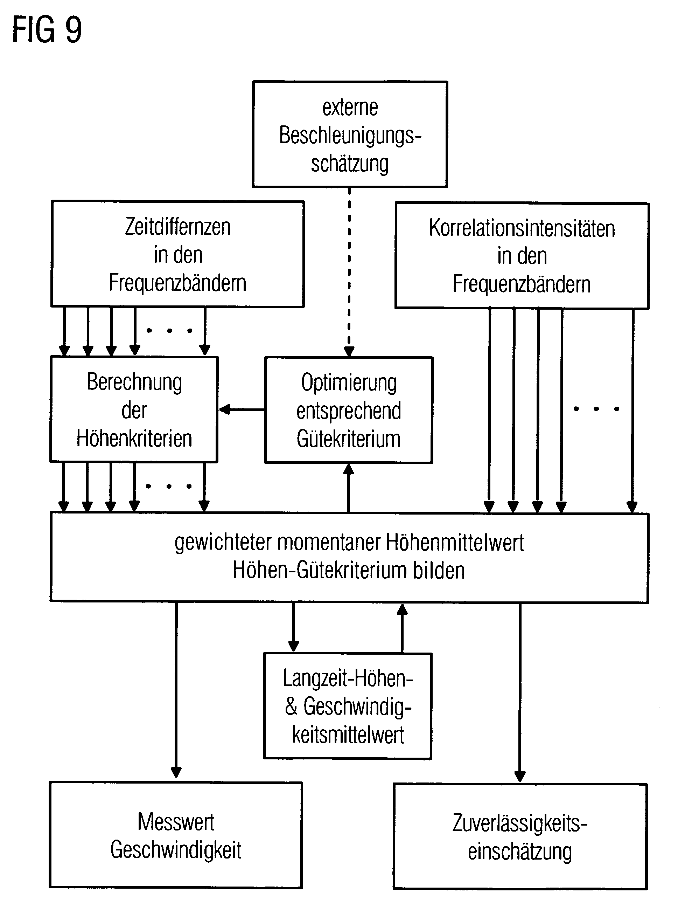

Die in Figur 9 vorgestellte zweite verbesserte Variante der Geschwindigkeitsauswertung soll einerseits die systematische Beschleunigungsanfälligkeit der Grundvariante eliminieren. Andererseits werden Wege gezeigt, wie im rückwirkungsbehafteten Fall vergangene Messwerte vorteilhaft in die Berechnung integriert werden können.

Als erster Schritt zur Kompensation der Beschleunigungseffekte dient die formale Beschreibung des systematischen Wegfehlers in (1.13). Dabei wird vereinfachend angenommen, dass der überwiegende Anteil der MW-Strahlung in der Nähe der Hauptstrahllinie (Figur 4) auf den Untergrund trifft. Eine weitere Näherung betrifft die Beschleunigung $\alpha$, welche für den Zeitraum zwischen der Passage als konstant gesetzt ist. Die Höhe des Sensors verändert sich bei Fahrzeugen nur geringfügig innerhalb kurzer Zeitabstände. Sie wird - wie in der fehlenden Abhängigkeit von $i$ bei (1.13) berücksichtigt - für einen Auswertezyklus ebenfalls als unveränderlich angenommen.

$$\Delta s(i, v_{akt}, a) = h \cdot \left( \frac{1}{\sqrt{\dfrac{1}{\left(\dfrac{f(i) \cdot \lambda}{2 \cdot (v_{akt} - a \cdot \Delta t(i))}\right)^2} - 1}} - \frac{1}{\sqrt{\dfrac{1}{\left(\dfrac{f(i) \cdot \lambda}{2 \cdot v_{akt}}\right)^2} - 1}} \right) \tag{1.13}$$

$$\frac{s + \Delta s(i, v_{akt}, a)}{\Delta t(i)} = v_{akt} - \frac{a \cdot \Delta t(i)}{2}$$

$\Delta s$     Wegabweichung der Messung durch die Momentanbeschleunigung (vorzeichenbehaftet)

$h$     Höhe des Sensors über dem reflektierenden Untergrund

$a$     Momentanbeschleunigung (vorzeichenbehaftet)

Die Gültigkeit der ersten Gleichung in (1.13) verlangt keine zusätzlichen Annahmen für die Art des Überganges von $v_{akt} - \alpha \cdot \Delta t(i)$ - Passage erstes MW-Modul - zu $v_{akt}$ - Passage zweites MW-Modul -. Der Wegfehler ist dabei proportional zu der ebenfalls unsicheren Montagehöhe $h$.

Bei der Konstruktion der zweiten Gleichung betrachtet man dagegen das Geschwindigkeitsverhalten zwischen den beiden Passagen. Sie geht von der vereinfachten Annahme aus, dass der Übergang von $v_{akt} - \alpha \cdot \Delta t(i)$ zu $v_{akt}$ linear erfolgt. Damit ist die durchschnittliche Geschwindigkeitssteigerung im betrachteten Zeitintervall $\frac{1}{2} \cdot \alpha \cdot \Delta t(i)$. Die zweite Gleichung stellt den Wegfehler $\Delta s(i,...)$ in direkte Relation zum bekannten $s$, so dass er substituierbar wird.

Der Modulabstand $s$ ist bekannt und die $\Delta t(i)$ sind direkte Messwerte. Es ist möglich, die Gleichungen (1.13) für jeden Analyseindex $i$ aufzustellen, so dass ein Gleichungssystem entsteht.

Es müssen die Variablen $\Delta s(i,...)$, $h$, $v_{akt}$ und $\alpha$ eliminiert werden. Die Werte von $\Delta s(i,...)$ sind als Ergebnis uninteressant. Sie lassen sich durch die Zusammenführung der jeweils zwei Gleichungen eines Indexes eliminieren. Die Werte von $v_{akt}$ und $\alpha$ müssen aus möglichst allen Gleichungen respektive Isodopplerstreifen ermittelt werden, um möglichst hohe Aussagekraft zu erhalten.

Damit bleibt noch die Variable $h$ zuzuordnen. Obwohl dieser Wert als kurzzeitig konstant angenommen wurde, geht er für jeden Index unabhängig in die verbleibende Bestimmungsgleichung (1.14) ein. Deshalb bietet es sich an, die Gleichungen des Systems für jeden Index jeweils nach den Höhenwerten aufzulösen und deren (gewichtete) Varianz als Kriterium für die Güte der Anpassung von $v_{akt}$ und $\alpha$ zu nutzen. Diese Strategie ist in (1.14) und (1.15) realisiert.

$$h(i, v_{akt}, a) = \frac{2 \cdot \left( \left( v_{akt} - \frac{a \cdot \Delta t(i)}{2} \right) \cdot \Delta t(i) - s \right) \cdot m \cdot n}{f(i) \cdot \lambda \cdot (m - n)}$$

$$m = \sqrt{v_{akt}^2 - \left( \frac{f(i) \cdot \lambda}{2} \right)^2}$$

$$n = \sqrt{(v_{akt} - a \cdot \Delta t(i))^2 - \left( \frac{f(i) \cdot \lambda}{2} \right)^2}$$

(1.14)

$m,n$      Substitutionen

Durch das Gleichungssystem (1.14) und die Zielfunktion (1.15) wird eine nichtlineare Optimierungsaufgabe beschrieben.

$$h_{EW} = \frac{\sum_i w(i) \cdot h(i, v_{akt}, a)}{\sum_i w(i)}$$

(1.15)

$$Z = \frac{1}{1 + \gamma_2 \cdot \sum_i w(i)} \cdot \left( \sum_i w(i) \cdot \left( h_{EW} - h(i, v_{akt}, a) \right)^2 \right) + Z_{Hist} \longrightarrow \min$$

mit $\gamma_2 \geq 0$

$\gamma 2$      empirische Parameter zur Justage des Filterverhaltens
$Z$      Zielfunktion des Optimierungsverfahrens
$Z_{Hist}$      optionaler Ergänzungsterm der Zielfunktion zur Nutzung vorangehender Ergebnisse

Man kann auf Grundlage von Gleichungen (1.15) einen analytischen Lösungsansatz durch Nullsetzen der partiellen Ableitungen nach $v_{akt}$ und $\alpha$ entsprechend (1.16) anstreben.

$$\frac{\delta Z(v_{akt}, a)}{\delta v_{akt}} = 0$$

(1.16)

$$\frac{\delta Z(v_{akt}, a)}{\delta a} = 0$$

Die Ableitungen sind analytisch darstellbar, allerdings ergibt sich dabei keine geschlossene Lösung des daraus entstehenden charakteristischen Gleichungssystems für die hier ausgeführte allgemeine Sensoranwendung. So ist dieser Weg nur für Spezialvarianten mit zusätzlichen Einschränkungen - Randbedingungen - hinsichtlich der Parameter möglich. Die analytischen Ableitungen können dennoch bei der multidimensionalen Optimierung nach Newton - Leuenberg-Marquard-Verfahren - vorteilhaft eingesetzt werden. Auch andere Lösungsstrategien durch Nutzung bekannter numerischer Verfahren zur iterativen Lösung nichtlinearer Optimierungsaufgaben sind möglich. Die Randbedingungen für die Optimierung lassen sich entsprechend (1.17) formulieren.

$$v_{out} = \begin{cases} v_{akt} & \text{für} \quad a_{min} \leq a \leq a_{max} \quad \text{und} \quad v_{akt} \leq v_{max} \quad \text{und} \quad h_{min} \leq h_{EW} \leq h_{max} \\ \\ v_{Ersatz} & \text{sonst} \end{cases}$$

$$G = \begin{cases} Z & \text{für} \quad a_{min} \leq a \leq a_{max} \quad \text{und} \quad v_{akt} \leq v_{max} \quad \text{und} \quad h_{min} \leq h_{EW} \leq h_{max} \\ \\ G_{Störung} & \text{sonst} \end{cases} \qquad (1.17)$$

| | |
|---|---|
| $G$ | Wert des Gütekriteriums |
| $G_{störung}$ | Wert des Gütekriteriums im Gestörtfall |
| $v_{Ersatz}$ | Ersatzwert für Geschwindigkeit im Gestörtfall |
| $v_{out}$ | Ausgabewertwert für die Fahrzeuggeschwindigkeit |
| $v_{max}$ | Maximalwert für die Fahrzeuggeschwindigkeit |
| $a_{max}$ | Maximalbeschleunigung des Fahrzeuges (positiv) |
| $a_{min}$ | Minimalbeschleunigung des Fahrzeuges (negativ) |
| $h_{max}$ | Maximalentfernung zum Untergrund |
| $h_{min}$ | Minimalentfernung zum Untergrund |

Das dargestellte Gütekriterium ist prinzipiell ohne den Vergangenheitsterm $Z_{Hist}$ für rückwirkungsfreie Algorithmen nutzbar. Die zur Optimierung eines Messwertes notwendigen Iterationen beeinflussen dann nicht die Unabhängigkeit aufeinander folgender Messwerte. Allerdings kann die Häufigkeit von Iterationsdivergenzen - Grenzwertüberschreitung in (1.17) - und die Schwankungsbreite der Messwerte bei erfolgreicher Iteration durch das Einbeziehen vorangehender Werte für $v$ und $h$ in $Z_{Hist}$ erheblich gesenkt werden.

$$Z_{Hist} = \gamma_3 \cdot \left( h_{EW} - h_{EW\_alt} \right)^2 + \gamma_4 \cdot \left( v_{akt} - v_{alt} \right)^2$$

$$h_{EW\_alt} = \gamma_1 \cdot h_{EW\_alt} + \left( 1 - \gamma_1 \right) \cdot h_{EW} \qquad (1.18)$$

mit $1 > \gamma_1 \geq 0$ $\gamma_3$, $\gamma_4 \geq 0$

| | |
|---|---|
| $\gamma_1$, $\gamma_3$, $\gamma_4$ | empirische Parameter zur Justage des Filterverhaltens |
| $v_{alt}$ | Geschwindigkeitsmesswert der vorangehenden Messung (vorzei-chenbehaftet) |
| $h_{EW}$ | gewichteter Mittelwert des geschätzten Untergrundabstandes |
| $h_{Ew\_alt}$ | vorangehender Mittelwert des geschätzten Untergrundabstandes |

**Patentansprüche**

**1.** Fahrzeuggeschwindigkeitssensor mit mehreren in Fahrtrichtung hintereinander positionierten Mikrowellentransceivern (MW-Transceiver 1, MW-Transceiver 2), deren niederfrequente Mischsignale einer Korrelationseinrichtung zugeführt sind, wobei zwei breitstrahlende Mikrowellentransceiver (MW-Transceiver 1, MW-Transceiver 2) vorgesehen sind, deren Signale in einer Auswerteeinrichtung zuerst im Frequenzband begrenzt und anschließend miteinander zur Korrelation gebracht werden,
**dadurch gekennzeichnet, dass**
eine erste Einrichtung zur Berechnung der Geschwindigkeit aus frequenzbandspezifischen Zeitdifferenzen und Korrelationsintensitäten und eine zweite Einrichtung zur Zuverlässigkeitseinschätzung der Geschwindigkeit aus transceiverspezifischen Dopplersignalen vorgesehen sind.

**2.** Fahrzeuggeschwindigkeitssensor nach Anspruch 1,
**dadurch gekennzeichnet, dass**
die Mikrowellentransceiver (MW-Transceiver 1, MW-Transceiver 2) in einer untergrundparallelen Ebene angebracht sind, sowie im Wesentlichen eine gleiche Abstrahlcharakteristik und den gleichen Abstrahlwinkel ($\alpha$) relativ zu einer untergrundparallelen Ebene aufweisen.

**3.** Fahrzeuggeschwindigkeitssensor nach Anspruch 1,
**dadurch gekennzeichnet, dass**
die Hauptstrahlrichtungen der Mikrowellentransceiver (MW-Transceiver 1, MW-Transceiver 2) um einen im Wesentlichen gleichen Winkel gegenüber der Fahrtrichtung bezüglich einer senkrecht auf dem Untergrund gedachten Drehachse seitlich verdreht sind.

**4.** Fahrzeuggeschwindigkeitssensor nach einem der vorangehenden Ansprüche, **dadurch gekennzeichnet, dass**
die Auswerteeinrichtung eine Digitalisierungseinrichtung (ADC), eine Einrichtung zur Frequenzbandzerlegung des digitalisierten Signals und eine digitale Korrelationseinrichtung aufweist.

**5.** Fahrzeuggeschwindigkeitssensor nach einem der vorangehenden Ansprüche, **dadurch gekennzeichnet, dass**
die Einrichtung zur Frequenzbandzerlegung über eine Einrichtung zur Ermittlung der Leistungsdichten in den Frequenzbändern mit der Korrelationseinrichtung verbunden ist, die mittels frequenzbandweiser Kreuzkorrelation eine Korrelationsmatrix erzeugt.

**6.** Fahrzeuggeschwindigkeitssensor nach einem der Ansprüche 1 bis 4,
**dadurch gekennzeichnet, dass**
eine Einrichtung zur Gewichtung des momentanen Höhenmittelwertes zwischen Transceiver und Untergrund und zur Bildung eines Höhen-Gütekriteriums vorgesehen ist, die von Zeitdifferenzen und Korrelationsintensitäten in den Frequenzbändern beaufschlagt ist, und deren Ausgangssignal einer Geschwindigkeitsberechnungseinrichtung und einer Einrichtung zur Zuverlässigkeitseinschätzung aufgrund des Höhen-Gütekriteriums zugeführt sind.

**7.** Fahrzeuggeschwindigkeitssensor nach einem der vorangehenden Ansprüche,
**dadurch gekennzeichnet, dass**
ein Beschleunigungsschätzwert eines zusätzlichen Fahrzeuggeschwindigkeitssensors bei der Geschwindigkeitsberechnung Berücksichtigung findet.

## Claims

**1.** Vehicle speed sensor having a plurality of microwave transceivers (MW transceiver 1, MW transceiver 2) which are positioned behind one another in the direction of travel and the low-frequency mixed signals of which are supplied to a correlation device, two wide-angle microwave transceivers (MW transceiver 1, MW transceiver 2) whose signals are first limited in the frequency band in an evaluation device and are then correlated with one another being provided,
**characterized in that**
a first device for calculating the speed from frequency-band-specific time differences and correlation intensities and a second device for estimating the reliability of the speed from transceiver-specific Doppler signals are provided.

**2.** Vehicle speed sensor according to Claim 1,
**characterized in that**
the microwave transceivers (MW transceiver 1, MW transceiver 2) are fitted in a plane which is parallel to the underlying surface and have essentially the same emission characteristic curve and the same emission angle ($\alpha$) relative to a plane which is parallel to the underlying surface.

**3.** Vehicle speed sensor according to Claim 1,
**characterized in that**
the main beam directions of the microwave transceivers (MW transceiver 1, MW transceiver 2) are laterally rotated through essentially the same angle relative to the direction of travel with respect to an axis of rotation which is imagined to be perpendicular to the underlying surface.

**4.** Vehicle speed sensor according to one of the preceding claims,
**characterized in that**
the evaluation device has a digitization device (ADC), a device for frequency band analysis of the digitized signal and a digital correlation device.

**5.** Vehicle speed sensor according to one of the preceding claims,
**characterized in that**
the device for frequency band analysis is connected, via a device for determining the power densities in the frequency bands, to the correlation device which generates a correlation matrix using frequency-band cross-correlation.

**6.** Vehicle speed sensor according to one of Claims 1 to 4,
**characterized in that**
a device for weighting the instantaneous height mean value between the transceiver and the underlying surface and for forming a height quality criterion is provided, time differences and correlation intensities in the frequency bands being applied to said device, and the output signal from said device being supplied to a speed calculation device and to a device for estimating the reliability on the basis of the height quality criterion.

**7.** Vehicle speed sensor according to one of the preceding claims,
**characterized in that**
an estimated acceleration value of an additional vehicle speed sensor is taken into account when calculating the speed.


**Revendications**

**1.** Capteur de vitesse pour véhicule automobile ayant plusieurs émetteurs-récepteurs ( MW-Transceiver 1, MW-Transceiver 2 ) à micro-onde placés les uns derrières les autres dans le sens de la marche, dont les signaux mixtes de basse fréquence sont envoyés à un dispositif de corrélation, dans lequel il est prévu deux émetteurs-récepteurs ( MW-Transceiver 1, MW-Transceiver 2 ) à micro-ondes à rayonnement large, dont les signaux sont limités d'abord dans la bande de fréquence dans un dispositif d'exploitation et sont mis ensuite en corrélation entre eux,
**caractérisé en ce qu'**un premier dispositif est prévu pour le calcul de la vitesse à partir de différences de temps spécifiques à la bande de fréquence et d'intensités de corrélation et un deuxième dispositif pour l'appréciation de la fiabilité de la vitesse à partir de signaux Doppler spécifiques aux émetteurs-récepteurs.

**2.** Capteur de vitesse de véhicule automobile suivant la revendication 1,
**caractérisé en ce que** les émetteurs-récepteurs ( MW-Transceiver 1, MW-Transceiver 2 ) à micro-onde sont mis dans un plan parallèle au sol et ont aussi pour l'essentiel une même caractéristique de rayonnement et le même angle ( $\alpha$ ) de rayonnement par rapport à un plan parallèle au sol.

**3.** Capteur de vitesse de véhicule automobile suivant la revendication 1,
**caractérisé en ce que** les directions principales de rayonnement des émetteurs-récepteurs ( MW-Transceiver 1, MW-Transceiver 2 ) à micro-onde sont tournées latéralement pour l'essentiel du même angle par rapport au sens de marche par rapport à un axe imaginaire perpendiculaire au sol.

**4.** Capteur de vitesse de véhicule automobile suivant l'une des revendications,
**caractérisé en ce que** le dispositif d'exploitation a un dispositif ( ADC ) de numérisation, un dispositif de décomposition de bande de fréquence du signal numérisé et un dispositif de corrélation numérique.

**5.** Capteur de vitesse de véhicule automobile suivant l'une des revendications,
**caractérisé en ce que** le dispositif de décomposition de bande de fréquence est relié au dispositif de corrélation par un dispositif de détermination de la densité de puissance dans les bandes de fréquence, dispositif de corrélation qui produit une matrice de corrélation au moyen d'une corrélation croisée bande de fréquence par bande de fréquence.

**6.** Capteur de vitesse de véhicule automobile suivant la revendication 1 à 4,
**caractérisé en ce qu'**il est prévu un dispositif de pondération de la valeur moyenne instantanée de niveau entre des émetteurs-récepteurs et le sol et de formation d'un critère niveau-qualité, qui est alimenté par des différences de temps et par des intensités de corrélation dans les bandes de fréquence et dont le signal de sortie est envoyé à un dispositif de calcul de vitesse et à un dispositif d'appréciation de la fiabilité sur la base du critère de niveau-qualité.

7. Capteur de vitesse de véhicule automobile suivant l'une des revendications précédentes, **caractérisé en ce qu'**une valeur d'appréciation de l'accélération d'un capteur supplémentaire de vitesse de véhicule automobile est prise en compte lors du calcul de la vitesse.

# FIG 1
## PRIOR ART

Fahrzeug in Bewegung

Korrelation

einkanaliges MW-Signal

MW-Transceiver 2

MW-Transceiver 1

Mikrowellenstrahlung

Untergrund

# FIG 2
## PRIOR ART

Fahrzeug in Bewegung

Frequenz-auswertung

zweikanaliges (analytisches) MW-Signal

MW-Transceiver

Mikrowellenstrahlung

$\alpha$

$\Delta\alpha$

Untergrund

# FIG 3

Fahrzeug in Bewegung

Multiratenanalyse

einkanaliges MW-Signal

MW-Transceiver 2

MW-Transceiver 1

$\alpha_{max}$ $\alpha$

$\alpha_{min}$

$\Delta\alpha$

h

Untergrund

# FIG 4

bestrahlte Fläche (Footprint)     Iso-Dopplerlinien

Hauptstrahllinie

wirksame Teilfläche bei
Bandpassfilterung der
MW-Signale

Untergrund

# FIG 5

```
┌──────────────────────┐              ┌──────────────────────┐
│   MW-Transceiver 1   │              │   MW-Transceiver 2   │
└──────────────────────┘              └──────────────────────┘
        Analog-                              Analog-
        signale                              signale
┌──────────────────────┐              ┌──────────────────────┐
│         ADC          │              │         ADC          │
└──────────────────────┘              └──────────────────────┘
```

| Fre-quenz-band-zer-legung | Signale oder Leis-tungs-dichten in ~N Bändern | Kor-relation | Signale oder Leis-tungs-dichten in ~N Bändern | Fre-quenz-band-zer-legung |

Korrelations- Matrix $M(i, \Delta t)$

| Überlagerung der $i$ Zeilen |

| Suche Maximumverschiebung $\Delta t$ |

| $v = s/\Delta t$ |

# FIG 6

```
MW-Transceiver 1          MW-Transceiver 2

    Analog-                    Analog-
    signale                    signale

      ADC                        ADC
```

| Fre-quenz-band-zer-legung | Signale oder Leis-tungs-dichten in~N Bändern | Kor-relation | Signale oder Leis-tungs-dichten in~N Bändern | Fre-quenz-band-zer-legung |

Korrelations- Matrix $M(i, \Delta t)$

Suche Maximum für jedes $i$

Zeitdifferenzen          Intensitäten

Geschwindigkeitsberechnung

Geschwindigkeitsmesswert
Zuverlässigkeitseinschätzung

Plausibilitätsvergleich mit
Dopplerergebnis

# FIG 7

## FIG 8

```
┌─────────────────────┐        ┌─────────────────────┐
│    Zeitdiffernzen    │        │ Korrelationsintensitäten │
│       in den         │        │       in den         │
│   Frequenzbändern    │        │   Frequenzbändern    │
└─────────────────────┘        └─────────────────────┘
      ↓ ↓ ↓ ↓  · · ·  ↓              ↓ ↓ ↓ ↓  · · ·  ↓
┌───────────────────────────────────────────────────────┐
│              Wichtung der Zeitdifferenzen              │
└───────────────────────────────────────────────────────┘
           ↓                              ↓
┌─────────────────────┐        ┌─────────────────────┐
│ Ergebnisgeschwindigkeit │    │     Gütekriterium    │
│        bilden        │        │        bilden        │
└─────────────────────┘        └─────────────────────┘
           ↓                              ↓
┌─────────────────────┐        ┌─────────────────────┐
│      Messwert        │        │   Zuverlässigkeits-  │
│   Geschwindigkeit    │        │     einschätzung     │
└─────────────────────┘        └─────────────────────┘
```

# FIG 9

```
                    ┌──────────────────┐
                    │    externe       │
                    │ Beschleunigungs- │
                    │    schätzung     │
                    └──────────────────┘
                             ┊
┌──────────────────┐        ┊        ┌──────────────────────┐
│  Zeitdiffernzen  │        ┊        │ Korrelationsintensitäten │
│     in den       │        ┊        │      in den           │
│  Frequenzbändern │        ┊        │   Frequenzbändern     │
└──────────────────┘        ┊        └──────────────────────┘
   │ │ │ │ · · · │          ┊           │ │ │ │ · · · │
   ▼ ▼ ▼ ▼       ▼          ┊
┌──────────────┐      ┌──────────────┐
│  Berechnung  │ ◄──  │ Optimierung  │
│     der      │      │ entsprechend │
│ Höhenkriterien│     │ Gütekriterium│
└──────────────┘      └──────────────┘
   │ │ │ │ · · · │           ▲
   ▼ ▼ ▼ ▼       ▼           │
┌────────────────────────────────────────────────────────────┐
│      gewichteter momentaner Höhenmittelwert                 │
│          Höhen-Gütekriterium bilden                         │
└────────────────────────────────────────────────────────────┘
     │              │            ▲                    │
     │              ▼            │                    │
     │      ┌──────────────┐     │                    │
     │      │ Langzeit-Höhen-│   │                    │
     │      │ & Geschwindig-│    │                    │
     │      │ keitsmittelwert│   │                    │
     │      └──────────────┘                          │
     ▼                                                ▼
┌──────────────┐                          ┌──────────────────┐
│  Messwert    │                          │ Zuverlässigkeits- │
│ Geschwindigkeit │                       │   einschätzung    │
└──────────────┘                          └──────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4223119 A1
- DE 4436723 A1